# EUROPEAN PATENT SPECIFICATION

(11) **EP 2 165 861 B1**
(45) Date of publication and mention of the grant of the patent: **14.12.2011**
(21) Application number: 09170509.5
(22) Date of filing: 17.09.2009
(51) Int. Cl.: B60C 15/06

(54) **Turnup reinforcing structure for pneumatic tires**
Stulpenverstärkungsstruktur für Luftreifen
Structure de renfort de bandage pour pneus

(30) Priority: 18.09.2008 US 212682
(43) Date of publication of application: 24.03.2010
(73) Proprietor: The Goodyear Tire & Rubber Company, Akron, OH 44316-0001 (US)
(72) Inventor: Du, Mingliang, Copley, OH 44321 (US); Hamzeh, Osama, Kent, OH 44240 (US); Ding, Xu, West Hartford, CT 06107 (US); White, Ronald Willis, Mogadore, OH 44260 (US); Kavaturu, Mahesh, L-8049 Strassen (LU); Toumni, Nizar, L-9053 Ettelbruck (LU); De Barsy, Olivier, L-8467 Eischen (LU)
(74) Representative: Kutsch, Bernd

(56) References cited:
- WO-A-2007/134743
- DE-A1- 2 630 657
- GB-A- 2 276 357
- JP-A- 2005 041 254
- US-A- 4 387 759

## Description

### Background of the Invention

A pneumatic vehicle tire typically includes a pair of axially separated inextensible beads. A circumferentially disposed bead filler apex extends radially outward from each respective bead. At least one carcass ply extends between the two beads. The carcass ply has axially opposite end portions, each of which is turned up around a respective bead and secured thereto. Tread rubber and sidewall rubber are located axially and radially outward of the carcass ply.

The bead area is one part of the tire that contributes a substantial amount to the rolling resistance of the tire, due to cyclical flexure which also leads to heat buildup. Under conditions of severe operation, as with truck tires, the flexure and heating in the bead region can be especially problematic, leading to cracking of surrounding rubber. In particular, the ply turnup ends are prone to separation from adjacent structural elements of the tire. The ply is reinforced with materials such as nylon, polyester, rayon, and metal which have much greater stiffness (i.e., modulus of elasticity) than does the adjacent rubber compound of which much of the tire is made. The difference in elastic modulus of mutually adjacent tire elements leads to cracking and separation when the tire is stressed and deformed during use.

A variety of conventional structural design approaches have been used to manage the cracking and separation of tire elements in the bead regions of tires. For example, one method has been to provide a "flipper" surrounding the bead and a bead filler. The flipper works as a spacer that keeps the ply from making direct contact with the inextensible beads, allowing some degree of relative motion between the ply, where it turns upward under the bead, and the respective beads. In this role as a spacer, the flipper reduces the inevitable disparities of strain on the ply and on the adjacent rubber components of the tire (e.g., filler apex and sidewall rubber in the bead region and the elastomeric portions of the ply itself).

Prior to the use of steel-reinforced radial ply construction, conventional plies were reinforced with materials having substantially lower moduli of elasticity than that of steel. Accordingly, the stresses associated with heavy-duty tire use were more easily accommodated by the respectively adjacent components, such as the ply reinforcing materials and the adjacent rubber polymeric materials. Such tires were less durable than are those having metal reinforced plies. Still, disparities of respective moduli of elasticity led to cracking and ply separation under severe conditions, beginning at the ply turnup ends.

In addition to the use of flippers as a means by which to reduce the tendency of a ply to separate, another conventional method involves the placement of "chippers." A chipper is a circumferentially deployed metal or fabric layer disposed within the bead region in the portion of the tire where the bead fits onto the wheel rim. More specifically, the chipper lies inward of the wheel rim (i.e., toward the bead) and outward (i.e., radially outward relative to the bead, viewed in cross section) of the portion of the ply that turns upward around the bead. Chippers stiffen and increase the resistance to flexure of the adjacent rubber material, which is typically adjacent to the turnup ends.

Also, given that the ply is, on each side of the tire, clamped around, or anchored to, or "turned up" about, the respective bead, there exists a "turn-up end" (as viewed in the cross section of a tire) that extends radially outward within, and circumferentially about, each sidewall. Limits on the length of the ply turnup ends are made in order to locate the ends of the ply in positions where radial deformations of the tire are relatively small.

Stresses that result in the deposition of energy (i.e., the generation of heat) in the bead region and in the region where the turnup ends terminate are frequently accompanied by strains that contribute to cracking and separation failures at the turnup ends. A balanced design for a reinforced bead assembly of a tire has stress characteristics that lead to reduced flexural energy generation (heat buildup) and to strain characteristics that can be uniformly borne by mutually adjacent tire components in the bead region, including the turnup ends.

Conventional radial-ply truck tires, in which the one or more plies are reinforced with steel cables or cords, are prone to turnup cracking and separation when exposed to severe service. Part of the cause of cracking and separation is related to the stresses described above and to the disparate moduli of elasticity of the respective metal and adjacent polymeric rubber compounds. As the tire undergoes flexure during heavy-duty use, flexure of the sidewalls in the region near to and immediately radially outward of the beads experience repeated flexural deformations in one or more directions, such as the radial and axial directions. Also, cracking and ply separation is especially problematic if the tire is overinflated or underinflated.

As stated above, a high stress/strain concentration region exists at ply turn-up ends. In addition, bonding between the sharp and narrow ending of ply wires and adjacent compounds may be inadequate, due to lack of adhesive brass at tips of cut wires. Therefore, rubber is prone to crack initiation and propagation adjacent to the ply end.

It would be desirable to provide a bead region design that can reduce ply end cracking and separation initiation and propagation within radial tires exposed to severe service conditions. Particularly, it would be desirable to reduce the flexural heat buildup associated with the cyclical shearing stresses and concomitant cyclical shearing strains in the ply end regions of truck tires exposed to severe operating conditions.

Conventional approaches for reducing cracking have added a gum strip-type compound adjacent the ply turnup ends. These conventional approaches have not significantly altered the geometry or amount of crack initiation and propagation. Cracks still initiate and propagate through the gum strip-type compound.

GB-A- 2 276 357 describes a pneumatic tire in accordance with the preamble of claim 1. Further pneumatic tires having cap structures encompassing a turnup end portion of a carcass ply are described in JP-A-2005 041254, DE-A- 26 30 657 and WO-A- 2007/134743.

### Summary of the Invention

The invention relates to a tire according to claim 1.

Dependent claims refer to preferred embodiments of the invention.

According to another aspect of the present invention, the fibers of the cap structure are aramid fibers.

According to still another aspect of the present invention, the fibers of the cap structure are nylon fibers.

According to yet another aspect of the present invention, the pneumatic tire further includes preferably nylon fabric flippers for absorbing strain between the annular beads and the carcass ply.

According to still another aspect of the present invention, the pneumatic tire further includes preferably steel cord chippers for absorbing strain between the turnup ends and a wheel rim on which the pneumatic tire is mounted.

According to yet another aspect of the present invention, axially outwardmost portions of the turnup end portions of the carcass ply extend radially outward beyond the top of a wheel rim flange of the wheel rim.

### Brief Description of the Drawings

The structure, operation, and advantages of the invention will become more apparent upon contemplation of the following description taken in conjunction with the accompanying drawings, wherein:
FIG. 1 shows a schematic cross-sectional view of an example pneumatic tire for use with the present invention; and
FIG. 2 shows a schematic detailed view of the bead region of the tire of FIG. 1.

### Definitions

"Apex" or "bead filler apex" means an elastomeric filler located radially above the bead core and between the plies and the turnup plies.

"Axial" and "Axially" means the lines or directions that are parallel to the axis of rotation of the tire.

"Bead" or "Bead Core" generally means that part of the tire comprising an annular tensile member of radially inner beads that are associated with holding the tire to the rim; the beads being wrapped by ply cords and shaped, with or without other reinforcement elements such as flippers, chippers, apexes or fillers, toe guards and chafers.

"Carcass" means the tire structure apart from the belt structure, tread, undertread over the plies, but including the beads.

"Casing" means the carcass, belt structure, beads, sidewalls and all other components of the tire excepting the tread and undertread, i.e., the whole tire.

"Chipper" refers to a narrow band of fabric or steel cords located in the bead area whose function is to reinforce the bead area and stabilize the radially inwardmost part of the sidewall.

"Circumferential" most often means circular lines or directions extending along the perimeter of the surface of the annular tread perpendicular to the axial direction; it can also refer to the direction of the sets of adjacent circular curves whose radii define the axial curvature of the tread, as viewed in cross section.

"Cord" means one of the reinforcement strands, including fibers, with which the plies and belts are reinforced.

"Equatorial Plane" means the plane perpendicular to the tire's axis of rotation and passing through the center of its tread; or the plane containing the circumferential centerline of the tread.

"Flipper" refers to a reinforcing fabric around the bead wire for strength and to tie the bead wire in the tire body.

"Gauge" refers generally to a measurement and specifically to thickness. "Lateral" means a direction parallel to the axial direction.

"Ply" means a cord-reinforced layer of rubber-coated radially deployed or otherwise parallel cords.

"Radial" and "radially" mean directions radially toward or away from the axis of rotation of the tire.

"Radial Ply Structure" means one or more carcass plies of which at least one ply has reinforcing cords oriented at an angle of between 65°and 90°with respect to the equatorial plane of the tire.

"Sidewall" means that portion of a tire between the tread and the bead.

"Toe guard" refers to the circumferentially deployed elastomeric rim-contacting portion of the tire axially inward of each bead.

"Turnup end" means the portion of a carcass ply that turns upward (i.e., radially outward) from the beads about which the ply is wrapped.

### Detailed Description of the Example Embodiment

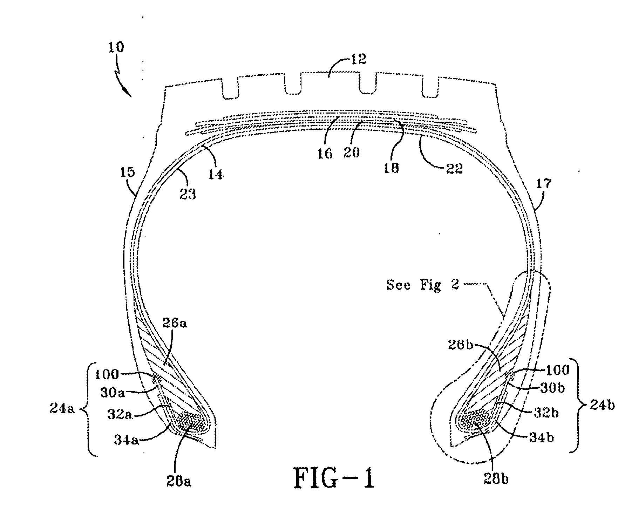

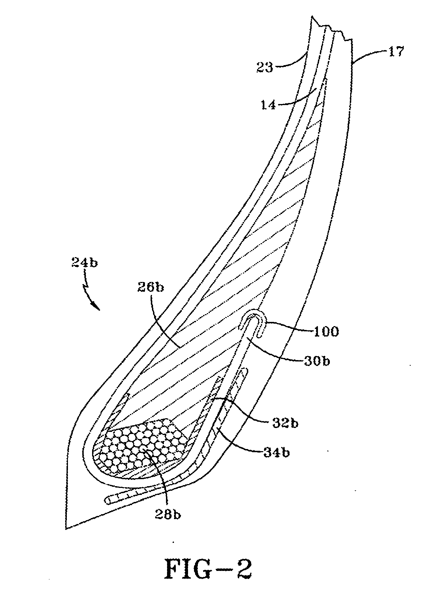

FIG. 1 shows a schematic cross-sectional view an example pneumatic tire 10 for use with the present invention. The pneumatic tire 10 has a tread 12, a single carcass ply 14, an innerliner 23, a belt structure 16 comprising preferably two or at least two belts 18, 20, a carcass structure 22, two sidewalls 15, 17, and bead regions 24a, 24b comprising bead filler apexes 26a, 26b and inextensible beads 28a, 28b. The example tire 10 is suitable for mounting on a rim of a vehicle, such as a truck. Preferably, the tire is a truck tire. The carcass ply 14 includes a pair of axially opposite turnup end portions 30a, 30b, each of which is secured to a respective one of the beads 28a, 28b. Each turnup end portion 30a or 30b of the carcass ply 14 is wrapped around the respective bead (28b, in FIG. 2) to a position sufficient to anchor each axial end portion 30a, 30b.

The carcass ply 14 may be a rubberized ply having a plurality of substantially parallel extending carcass reinforcing members made of such material as polyester, rayon, or similar organic polymeric compounds. Axially outwardmost portions of the turnup end portions 30a, 30b of the carcass ply 14 may extend radially outward by a distance of between 15 millimeters and 30 millimeters beyond a top of a wheel rim flange of a wheel rim.

The turnup end portions 30a, 30b of the carcass ply 14 may engage axial outer surfaces of flippers 32a, 32b and axial inner surfaces of chippers 34a, 34b. The chippers 34a, 34b may consist of narrow bands of steel cloth located in the bead area for the purpose of reinforcing the bead area and stabilizing the axially inwardmost part of the sidewalls 15, 17.

The flippers 32a, 32b wrap around the beads 28a, 28b and extend radially outward into the sidewall regions of the tire 10. The axially inward portion of flippers 32a, 32b terminate within the bead-filler apexes 26a, 26b. The axially outward portions of the flippers 32a, 32b lie radially inward of the turnup end portions 30a, 30b, which are also located radially beyond the radially outermost reach of the chippers 34a, 34b. An axially outermost portion of each flipper 32a, 32b may extend radially to within between 7 mm and 15 mm of the radially outermost reach of the turnup end portions 30a, 30b of the carcass ply 14.

The flippers 32a, 32b may be made of nylon fabric or other suitable thermoplastic polymers capable of extension when woven into fabrics, sheets, etc. of extreme toughness, strength and elasticity. The nylon fabric may be woven, or it can be of a monofilament or multifilament type of material in which the cords run in the same direction. The nylon fabric of the flippers 32a, 32b may have a thread pitch of between 5 and 30 ends per inch (2-12 ends/cm) and an overall thickness in the range of 0.3 to 1.2 mm, preferably 10 to 20 ends per inch (4-8 ends/cm) 0.5 to 1.0 mm gauge. The nylon cords of the flippers 32a, 32b may be oriented at an angle of between 20 degrees and 50 degrees with respect to the radial direction, preferably at an angle of between 25 degrees and 35 degrees. The flippers 32a, 32b may be termed "active" because they actively absorb (i.e. during tire deflection) differential strain between the very rigid beads 28a, 28b and less rigid metal reinforced carcass ply 14.

The chippers 34a, 34b may be made of steel cords. Each chipper 34a, 34b may be disposed adjacent to the portion of the carcass ply 14 that is wrapped around the beads 28a, 28b. Further, the chippers 34a, 34b may be disposed on opposite sides of the portion of the carcass ply 14 from the flippers 32a, 32b. The axially inwardmost portion of the chippers 34a, 34b may be disposed in a portion of the bead regions 24a, 24b that, when the tire 10 is mounted on a wheel, would be closest to a circularly cylindrical part of the wheel. The axially and radially outwardmost portion of the chippers 34a, 34b may be disposed in a portion of the bead regions 24a, 24b that, when the tire 10 is mounted on a wheel, would be inward of a circular portion of a wheel-rim flange, being separated from the circular portion of the wheel-rim flange by tire rubber. In other words, the chippers 34a, 34b are disposed circumferentially about the radially inwardmost portion of carcass ply 14 where it turns up around the beads 28a, 28b. The chippers 34a, 34b may extend radially outward, being more or less parallel with the turned up ends 30a, 30b of the carcass ply 14. The disposition of the chippers 34a, 34b may be mirror-symmetric with respect to the bead-regions 24a, 24b.

The chippers 34a, 34b protect the portion of the carcass ply 14 that wraps around the beads 28a, 28b from strains in the rubber that separates the chippers from a wheel rim. The chippers 24a, 24b reinforce the bead regions 24a, 24b and stabilize the radially inwardmost part of the sidewalls 15, 17. In other words, the chippers 34a, 34b, being constructed of relatively flexible steel cords encompassed with an elastomeric material, may absorb deformation in a way that minimizes transmission of stress-induced shearing strains that arise inward from a wheel rim, through the rubber portion to the turnup ends 30a, 30b of the carcass ply 14 where the chippers are most immediately adjacent to the rigid beads 28a, 28b.

In accordance with the present invention, the tire 10 further includes a cap structure 100 encompassing, or wrapping around, each turnup end 30a, 30b. The cap structure 100 has demonstrated superior advantage to improve fatigue life of the turnup ends 30a, 30b and surrounding area. The cap structure 100 is preferably U-shaped in cross-section (Figs. 1-2) and constructed of a reinforced fabric with fibers oriented in the range from -45 ° to +45 ° with respect to a radial direction of the tire 10. The cap structure 100 surrounds the turnup ends 30a, 30b by curving around the turnup ends at least 180° when viewed in cross-section (Figs. 1-2). Each turnup end 30a, 30b is thereby protected by a toroidal cap structure 100 adjacent the turnup ends and thereby contains any cracking in the rubber that may propagate from the turnup ends to the rubber outside of the cap structure. The cap structure 100 is preferably used to encompass each turn up end 30a, 30b. It is used only on one side of tire, for instance the outboard side. Furthermore, the cap structure may be a symmetric U-shaped cap structure (as shown in Fig. 1 and Fig. 2) or an asymmetric U-shaped cap structure, i.e. a cap structure 100 in which one side (or leg) of the U is larger than on the respective other side. In case of such an asymmetric U-structure, the axially inner side of the U may be longer, for instance 5 to 10 mm longer, than the axially outer side of the U.

The cap structure 100 has been shown to accomplish two goals: 1) the cap structure contains existing cracks adjacent the turnup ends 30a, 30b within the U-shaped cap structure; and 2) the cap structure relocates the cracks. The cap structure 100 replaces the sharp and narrow interface area at the turnup ends 30a, 30b with the rounded and larger U-cap structure thereby smoothing the transition or interface both in terms of material and geometry.

The reinforced U-cap structure 100 thus greatly increases crack resistance capacity and, in effect, stops crack propagation through the U-cap structure. Further, crack driving forces at the exterior of the U-cap structure 100 are greatly contained and substantially reduced by the U-cap structure, thereby significantly delaying, if not completely eliminating, crack initiation at the exterior of the U-cap structure for the life of the tire. In other words, the reinforced U-cap structure 100 shifts and greatly delays crack initiation from the ply turnup ends 30a, 30b to the exterior of the U-cap structure.

Fig. 2 details a schematic configuration of a bead area 24b featuring U-cap structure 100 and its reinforcement around the turnup end 30b. In this example, the U-cap structure 100 may have a total cross-sectional U-length of from 20 to 30 mm such as 25 mm. The U-cap reinforcement is preferably Aramid (Kevlar).

One example bead durability test has shown that mileage may be increased from an average of 11,150 km to an average of 13,069 km, or an almost 2,000 km (17%) improvement, by incorporating a cap structure 100 in accordance with the present invention at the turnup ends 30a, 30b of a radial truck tire, such as the example pneumatic tire 10. Thus, the cap structure 100 may be applied to turnup ends 30a, 30b to improve bead area durability. Nylon, PET, PEN, rayon, or any suitable material, or any suitable combination of materials (i.e., hybrid) may be used for reinforcing the cap structure 100. Less costly material may obviously reduce cost of the tire.

As stated above, conventional turnup ends have sharp, narrow, and bare transitions between the metal ply ends and adjacent polymer compounds. Thus, macro cracks appear and propagate from the adjacent polymer compounds, typically surrounding rubber. The unique cap structure 100 may shield or contain the cracks within the U-shaped cap, and further introduce a relatively large and smooth interface transition between the fabric of the cap structure and the adjacent polymer compound, thus greatly improving bead and overall tire durability

## Claims

1. A pneumatic tire comprising:
a tread (12);
two inextensible annular beads (28a, 28b);
a carcass ply (14) having two turnup end portions (30a, 30b), each wrapped around one of the annular beads (28a, 28b); and
a cap structure (100) encompassing a turnup end portion (30a, 30b), the cap structure (100) having a substantially U-shaped cross-section for surrounding the turnup end portion (30a, 30b), the cap structure (100) comprising reinforced fabric with fibers oriented in the range from -45° to +45° with respect to a radial direction of the pneumatic tire (10); **characterized in that** the cap structure (100) is used only on one side of the tire.

2. The pneumatic tire as set forth in claim 1 wherein the fibers of the cap structure are aramid fibers.

3. The pneumatic tire as set forth in claim 1 wherein the fibers of the cap structure are nylon fibers.

4. The pneumatic tire as set forth in claim 1 further including fabric flippers (32a, 32b) for absorbing strain between the annular beads (28a, 28b) and the carcass ply (14).

5. The pneumatic tire as set forth in claim 4 wherein the fabric flippers (32a, 32b) are preferably nylon fabric flippers (32a, 32b),

6. The pneumatic tire as set forth in claim 1 or 5 further including chippers (34a, 34b) for absorbing strain between the turnup end portions (30a, 30b) and a wheel rim on which the pneumatic tire may be mounted.

7. The pneumatic tire as set forth in claim 6 wherein the, chippers (34a, 34b) are steel cord chippers (34a, 34b).

8. The pneumatic tire as set forth in claim 6 wherein axially outwardmost portions of the turnup end portions (30a, 30b) of the carcass ply (14) extend radially outward beyond the top of a wheel rim flange of the wheel rim.

9. The pneumatic tire of at least one of the previous claims having only a single carcass ply (14).

10. The pneumatic tire of at least one of the previous claims wherein the cap structure has a symmetrical U-shaped cross section.

11. The pneumatic tire of at least one of the previous claims wherein the cap structure (100) is an annular cap structure (100).

12. The pneumatic tire of at least one of the previous claims wherein the tire is a truck tire.

13. The pneumatic tire of claim 1 wherein the at least one of the previous claims wherein the cap structure (100) is used only on the outboard side of the tire.

14. The pneumatic tire of claim 1 wherein the cap structure is an asymmetric U-shaped cap structure (100).

15. The pneumatic tire of claim 14 wherein the axially inner side of the U is longer, preferably 5 to 10 mm longer, than the axially outer side of the U.

## Patentansprüche

1. Luftreifen, umfassend:
eine Lauffläche (12);
zwei unausdehnbare ringförmige Wülste (28a, 28b);
eine Karkassenlage (14) mit zwei Umschlagendabschnitten (30a, 30b), die jeder um einen der ringförmigen Wülste (28a, 28b) herumgeschlagen sind; und
eine Kappenstruktur (100), die einen Umschlagendabschnitt (30a, 30b) umschließt, wobei die Kappenstruktur (100) einen im Wesentlichen U-förmigen Querschnitt zum Umgeben des Umschlagendabschnitts (30a, 30b) aufweist, wobei die Kappenstruktur (100) verstärktes Gewebe mit Fasern umfasst, die im Bereich von -45° bis +45° bezüglich einer radialen Richtung des Luftreifens (10) orientiert sind; **dadurch gekennzeichnet, dass** die Kappenstruktur (100) nur an einer Seite des Reifens verwendet wird.

2. Luftreifen, wie in Anspruch 1 ausgeführt, wobei die Fasern der Kappenstruktur Aramidfasern sind.

3. Luftreifen, wie in Anspruch 1 ausgeführt, wobei die Fasern der Kappenstruktur Nylonfasern sind.

4. Luftreifen, wie in Anspruch 1 ausgeführt, weiter Gewebe-Kernfahnen (32a, 32b) zum Absorbieren von Dehnung zwischen den ringförmigen Wülsten (28a, 28b) und der Karkassenlage (14) beinhaltend.

5. Luftreifen, wie in Anspruch 4 ausgeführt, wobei die Gewebe-Kernfahnen (32a, 32b) bevorzugt Nylon-Gewebekernfahnen (32a, 32b) sind.

6. Luftreifen, wie in Anspruch 1 oder 5 ausgeführt, weiter Wulstverstärker (34a, 34b) zum Absorbieren von Dehnung zwischen den Umschlagendabschnitten (30a, 30b) und einer Radfelge, worauf der Luftreifen montiert sein kann, beinhaltend.

7. Luftreifen, wie in Anspruch 6 ausgeführt, wobei die Wulstverstärker (34a, 34b) Stahlkord-Wulstverstärker (34a, 34b) sind.

8. Luftreifen, wie in Anspruch 6 ausgeführt, wobei axial äußerste Abschnitte der Umschlagendabschnitte (30a, 30b) der Karkassenlage (14) sich radial auswärts über die Spitze eines Radfelgenhorns der Radfelge hinaus erstrecken.

9. Luftreifen nach mindestens einem der vorgenannten Ansprüche, der nur eine einzige Karkassenlage (14) aufweist.

10. Luftreifen nach mindestens einem der vorgenannten Ansprüche, wobei die Kappenstruktur einen symmetrischen U-förmigen Querschnitt aufweist.

11. Luftreifen nach mindestens einem der vorgenannten Ansprüche, wobei die Kappenstruktur (100) eine ringförmige Kappenstruktur (100) ist.

12. Luftreifen nach mindestens einem der vorgenannten Ansprüche, wobei der Reifen ein Lastkraftwagenreifen ist.

13. Luftreifen nach Anspruch 1, wobei die Kappenstruktur (100) nur an der Außenbordseite des Reifens verwendet wird.

14. Luftreifen nach Anspruch 1, wobei die Kappenstruktur eine asymmetrische U-förmige Kappenstruktur (100) ist.

15. Luftreifen nach Anspruch 14, wobei die axial innere Seite des U länger, bevorzugt 5 bis 10 mm länger, als die axial äußere Seite des U ist.

## Revendications

1. Bandage pneumatique comprenant :
une bande de roulement (12) ;
deux talons annulaires inextensibles (28a, 28b) ;
une nappe de carcasse (14) possédant deux portions terminales de retournement vers le haut (30a, 30b), chacune entourant un des talons annulaires (28a, 28b) ; et
une structure de sommet (100) englobant une portion terminale de retournement vers le haut (30a, 30b), la structure de sommet (100) possédant une section transversale essentiellement en U pour entourer la portion terminale de retournement vers le haut (30a, 30b), la structure de sommet (100) comprenant du tissu renforcé avec des fibres qui sont orientées dans la plage de -45° à +45° par rapport à la direction radiale du bandage pneumatique (10), **caractérisé en ce que** la structure de sommet (100) est utilisée uniquement sur un seul côté du bandage pneumatique.

2. Bandage pneumatique selon la revendication 1, dans lequel les fibres de la structure de sommet sont des fibres d'aramide.

3. Bandage pneumatique selon la revendication 1, dans lequel les fibres de la structure de sommet sont des fibres de nylon.

4. Bandage pneumatique selon la revendication 1, englobant en outre des bandelettes de protection de talons en tissu (32a, 32b) pour absorber les déformations entre les talons annulaires (28a, 28b) et la nappe de carcasse (14).

5. Bandage pneumatique selon la revendication 4, dans lequel les bandelettes de protection de talons en tissu (32a, 32b) représentent de préférence des bandelettes de protection de talons en nylon (32a, 32b).

6. Bandage pneumatique selon la revendication 1 ou 5, englobant en outre des renforts d'appui (34a, 34b) pour absorber les déformations entre les portions terminales de retournement vers le haut (30a, 30b) la jante d'une roue sur laquelle le bandage pneumatique peut être monté.

7. Bandage pneumatique selon la revendication 6, dans lequel les renforts d'appui (34a, 34b) sont des renforts d'appui (34a, 34b) constitués par des câblés en acier.

8. Bandage pneumatique selon la revendication 6, dans lequel les portions situées les plus à l'extérieur en direction axiale des portions terminales de retournement vers le haut (30a, 30b) de la nappe de carcasse (14) s'étendent en direction radiale vers l'extérieur au-delà du sommet du rebord de la jante de roue.

9. Bandage pneumatique selon au moins une des revendications précédentes, possédant une seule nappe de carcasse (14).

10. Bandage pneumatique selon au moins une des revendications précédentes, dans lequel la structure de sommet possède une section transversale symétrique en U.

11. Bandage pneumatique selon au moins une des revendications précédentes, dans lequel la structure de sommet (100) est une structure de sommet de forme annulaire (100).

12. Bandage pneumatique selon au moins une des revendications précédentes, dans lequel le bandage pneumatique est un bandage pneumatique pour camion.

13. Bandage pneumatique selon la revendication 1, dans lequel la structure de sommet (100) est utilisée uniquement sur le côté externe du bandage pneumatique.

14. Bandage pneumatique selon au moins une des revendications précédentes, dans lequel la structure de sommet (100) est une structure de sommet de forme annulaire (100).

15. Bandage pneumatique selon la revendication 14, dans lequel le côté interne du U en direction axiale est plus long, de préférence plus long à concurrence de 5 à 10 mm, que le côté externe du U en direction axiale.
